# EUROPÄISCHE PATENTANMELDUNG

(11) **EP 2 258 589 A1**
(43) Veröffentlichungstag der Anmeldung: **08.12.2010**
(21) Anmeldenummer: 10162933.5
(22) Anmeldetag: 17.05.2010
(51) Int. Cl.: B60R 19/54, F41H 7/02

(54) **Einrichtung zum Schutz gegen Drahtfallen zur Anordnung an einem Fahrzeug**

(30) Priorität: 05.06.2009 DE 102009024282
(71) Anmelder: Krauss-Maffei Wegmann GmbH & Co. KG, 80997 München (DE)
(72) Erfinder: Raczek, Matthias, 34270, Schauenburg (DE)
(74) Vertreter: Feder Walter Ebert

(57) **Zusammenfassung**

Einrichtung zum Schutz gegen Drahtfallen zur Anordnung an einem Fahrzeug mit einer Schneidvorrichtung (E) zum Durchtrennen eines Draht- oder Seilabschnitts (S) der Drahtfalle. Die Schneidvorrichtung (E) besitzt ein in einer Relativbewegung gegenüber dem Fahrzeug (P) bewegbares Schneidelement (3). Die Bewegung des Schneidelements (3) wird über eine Betätigungsvorrichtung (2) vom anlaufenden Draht- oder Seilabschnitt (S) ausgelöst.

## Beschreibung

Die Erfindung betrifft eine Einrichtung zum Schutz gegen Drahtfallen zur Anordnung an einem Fahrzeug mit den Merkmalen aus dem Oberbegriff des Patentanspruchs 1.

Unter einer Drahtfalle im Sinne der vorliegenden Erfindung wird dabei ein über eine Fahrbahn gespannter Draht oder ein Seil verstanden, das zur Bekämpfung von Fahrzeugen und Fahrzeugbesatzungen dient. Es handelt sich hier um ein Mittel der asymetrischen Kriegsführung. Durch die Drahtfalle können sowohl am Fahrzeug angeordnete Bauteile als auch die beispielsweise in der offenen Luke eines Panzerfahrzeugs stehenden Besatzungsmitglieder gefährdet werden.

Es sind Einrichtungen zum Schutz gegen Drahtfallen bekannt, bei denen der vom Fahrzeug eingefangene Draht- oder Seilabschnitt mit Hilfe von Führungsmitteln einer Schneidvorrichtung zugeführt wird. Die Schneidvorrichtung ist fest mit dem Fahrzeug verbunden, und durch die Bewegung des Fahrzeugs wird auf das Schneidwerkzeug eine Kraft ausgeübt, die zum Durchtrennen des Draht- oder Seilabschnitts führen soll. Die bekannten Einrichtungen haben den Nachteil, dass sich am Draht oder Seil der Drahtfalle, bis es zum Durchtrennen kommt, eine erhebliche Spannung aufbaut, die beim Durchtrennen in den abgetrennten Draht- oder Seilabschnitten eine starke Peitschenwirkung erzeugen kann, durch welche das Fahrzeug und insbesondere die Fahrzeugbesatzungen gefährdet werden können. Auch hat sich gezeigt, dass mit den bekannten Einrichtungen die Drähte oder Seile nicht immer sicher durchtrennt werden.

Der Erfindung liegt die Aufgabe zugrunde, eine Einrichtung zum Schutz gegen Drahtfallen zur Anordnung an einem Fahrzeug zu schaffen, mit der es ermöglicht wird, den Draht oder das Seil bei einer wesentlich geringeren Spannung durchzutrennen als mit den bekannten Einrichtungen. Es sollte ein sicheres Durchtrennen auch dickerer Drähte oder Seile mit reduzierter Peitschenwirkung ermöglicht werden.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sowie mit derartigen Einrichtungen versehene Fahrzeuge sind Gegenstand der abhängigen Ansprüche.

Ein Grundgedanke der Erfindung besteht darin, die bisherigen passiven Schneidvorrichtungen, bei denen das Schneidelement fest mit dem Fahrzeug verbunden ist und die Geschwindigkeit und die Richtung der Bewegung allein durch die Geschwindigkeit des Fahrzeugs bestimmt wird, durch eine aktive Schneidvorrichtung zu ersetzen, bei welcher das Schneidelement eine Relativbewegung gegenüber dem Fahrzeug ausführt, wobei diese Bewegung des Schneidelements über eine Betätigungsvorrichtung direkt vom anlaufenden Draht- oder Seilabschnitt ausgelöst wird.

Wie weiter unten anhand eines Ausführungsbeispiels näher erläutert, kann die Bewegung des Schneidelements eine Schwenkbewegung in einer Schneidebene parallel zur Fahrtrichtung des Fahrzeugs sein. Hierbei kann das bewegte Schneidelement mit einem in seiner Bewegungsrichtung liegenden fahrzeugfesten Gegenelement zusammenwirken, so dass eine Scherenwirkung erreicht wird. Die Betätigungsvorrichtung kann so ausgebildet sein, dass die Schubbewegung des anlaufenden Draht- oder Seilabschnitts direkt in die Schwenkbewegung des Schneidelements umgewandelt wird. Durch eine entsprechende Übersetzung kann dabei erreicht werden, dass die auf das Schneidelement ausgeübten Kräfte ausreichen, um auch dickere Drähte oder Seile rasch und sicher durchzutrennen. Hierdurch wird auch die nach dem Durchtrennen auftretende Peitschenwirkung stark reduziert.

Zur Hinführung des Drahtes oder Seiles zu der erfindungsgemäßen Schneidvorrichtung kann eine Fang- und Führungseinrichtung dienen mit einer Führungsbahn, an deren Ende die Schneidvorrichtung angeordnet ist und auf der der eingefangene Draht- oder Seilabschnitt der Drahtfalle anläuft.

Die erfindungsgemäße Einrichtung zum Schutz gegen Drahtfallen kann grundsätzlich an allen Fahrzeugen, die in entsprechend gefährdeten Gebieten unterwegs sind, angeordnet werden, insbesondere ist sie geeignet für Kampffahrzeuge, beispielsweise Kampfpanzer, Panzerhaubitzen etc..

Im Folgenden wird anhand der beigefügten Zeichnungen ein Ausführungsbeispiel für eine Einrichtung zum Schutz gegen Drahtfallen sowie ein mit einer derartigen Einrichtung ausgerüstetes Kampffahrzeug näher erläutert.

In den Zeichnungen zeigen:
- Fig. 1: in einer teilweise in Längsrichtung geschnittenen Seitenansicht die Schneidvorrichtung einer Einrichtung zum Schutz gegen Drahtfallen;
- Fig. 2: die Schneidvorrichtung nach Fig. 1 in einer perspektivischen Ansicht;
- Fig. 3: in perspektivischer Gesamtansicht eine Panzerhaubitze mit einer Einrichtung nach Fig. 1 und 2;
- Fig. 4: in perspektivischer Teildarstellung die Panzerhaubitze nach Fig. 3 im Bereich der Schneidvorrichtung nach Fig. 1 und 2;
- Fig. 5: die Panzerhaubitze nach Fig. 3 in Seitenansicht;
- Fig. 6: den Turm der Panzerhaubitze nach Fig. 5 in einer Teil- Seitenansicht.

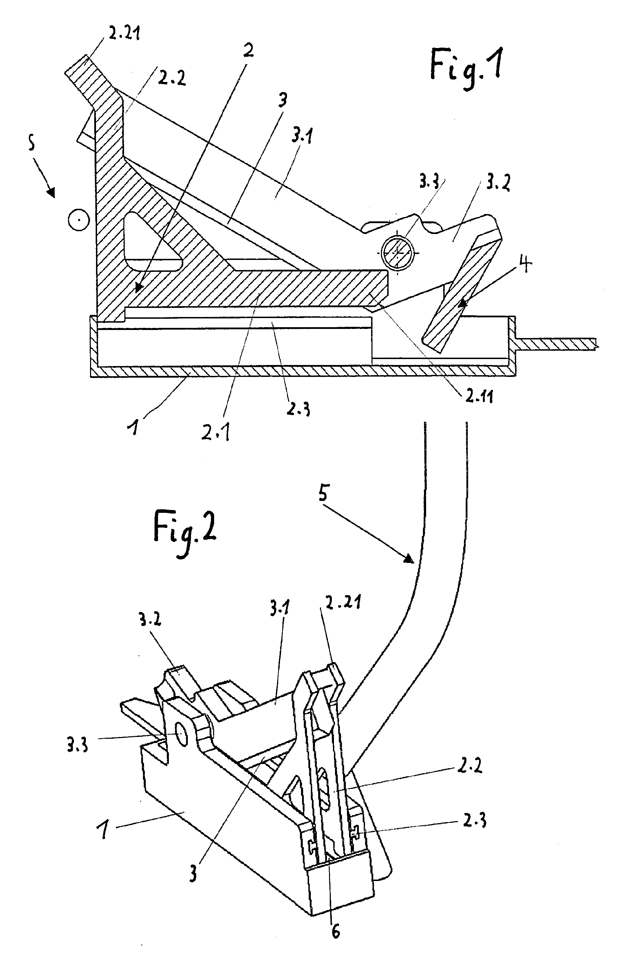

Die Figuren 1 und 2 zeigen die Schneidvorrichtung einer Einrichtung zum Schutz gegen Drahtfallen, die zur Anordnung an einem Fahrzeug gedacht ist, was weiter unten näher beschrieben wird.

Die Schneidvorrichtung besitzt einen am Fahrzeug zu befestigenden Grundkörper 1, in dem ein Steuerschieber über Führungen 2.3 in Längsrichtung des Grundkörpers 1 verschiebbar angeordnet ist. Der Grundkörper wird auf dem Fahrzeug so angeordnet, dass die Verschiebung des Steuerschiebers 2 entgegen der Fahrtrichtung erfolgt. Der Steuerschieber 2 dient als Betätigungselement für ein Schneidelement 3, das an dem einen Arm 3.1 eines zweiarmigen Schwenkhebels angeordnet ist, der um eine Drehachse 3.3 schwenkbar ist und dessen anderer Arm 3.2 eine Steuerfläche 4 trägt. Die beiden Schwenkarme 3.1 und 3.2 stehen unter einem vorgegebenen stumpfen Winkel zueinander und der das Schneidelement 3 tragende Arm 3.1 ragt, wie aus Fig. 2 zu ersehen, mittig zwischen den beiden Hälften des Steuerschiebers 2. Der Steuerschieber 2 ist insgesamt als Winkelstück ausgebildet mit einem in Verschiebungsrichtung angeordneten Schenkel 2.1, der an seinem freien Ende einen Steuernocken 2.11 trägt, und einen senkrecht zum ersten Schenkel 2.1 und parallel zur Schneidebene des Schneidelements 3 angeordneten zweiten Schenkel 2.2, der an seiner Vorderseite eine Auflauffläche für den anlaufenden Draht- oder Seilabschnitt S trägt. Am oberen Ende des zweiten Schenkels 2.2 ist eine hakenartige Abknickung 2.21 entgegen der Anlaufrichtung des Draht- oder Seilabschnitts S angeordnet, durch welcher verhindert wird, dass der Draht- oder Seilabschnitt S am Steuerschieber 2 nach oben abrutscht.

Die Steuerfläche 4 liegt in der Bewegungsbahn des Steuernockens 2.11. Wenn der Steuerschieber 2 durch den auflaufenden Draht- oder Seilabschnitt S in Fig. 1 nach rechts verschoben wird, läuft nach einer vorgegebenen Wegstrecke der Steuernocken 2.11 auf die Steuerfläche 4 auf, was zur Folge hat, dass der das Schneidelement 3 tragende Arm 3.1 eine Schwenkbewegung auf den aufgelaufenen Draht- oder Seilabschnitt S zu ausführt. Im Grundkörper 1 ist ein als zweites Schneidmesser ausgebildetes Gegenelement 6 fest angeordnet, so dass zwischen dem Schneidelement 3 und dem Gegenelement 6 eine Scherenwirkung auftritt, aufgrund der der aufgelaufene Draht- oder Seilabschnitt S durchtrennt wird.

Als Gegenelement kann an Stelle eines Schneidelements auch ein Amboßelement dienen.

In Fig. 2 ist weiterhin ein Element 5 einer Fang- und Führungsvorrichtung angedeutet. Wenn nun beispielsweise der eingefangene Draht- oder Seilabschnitt S einer Drahtfalle an dem Führungselement 5 entlang auf den Steuerschieber 2 zugleitet, so trifft er auf die Vorderseite des Schenkels 2.2, wodurch der Steuerschieber 2, wie bereits erwähnt, in Fig. 1 nach rechts verschoben wird und durch das Absenken des Schneidelements 3 der Trennvorgang durchgeführt wird. Die Hebelübersetzung zwischen Steuerschieber 2 und Schneidelement 3 über die Steuerfläche 4 und die beiden Schwenkarme 3.2 und 3.1 kann so gewählt werden, dass die Kraftwirkung für ein rasches Durchtrennen des Draht-oder Seilabschnitts S erreicht wird.

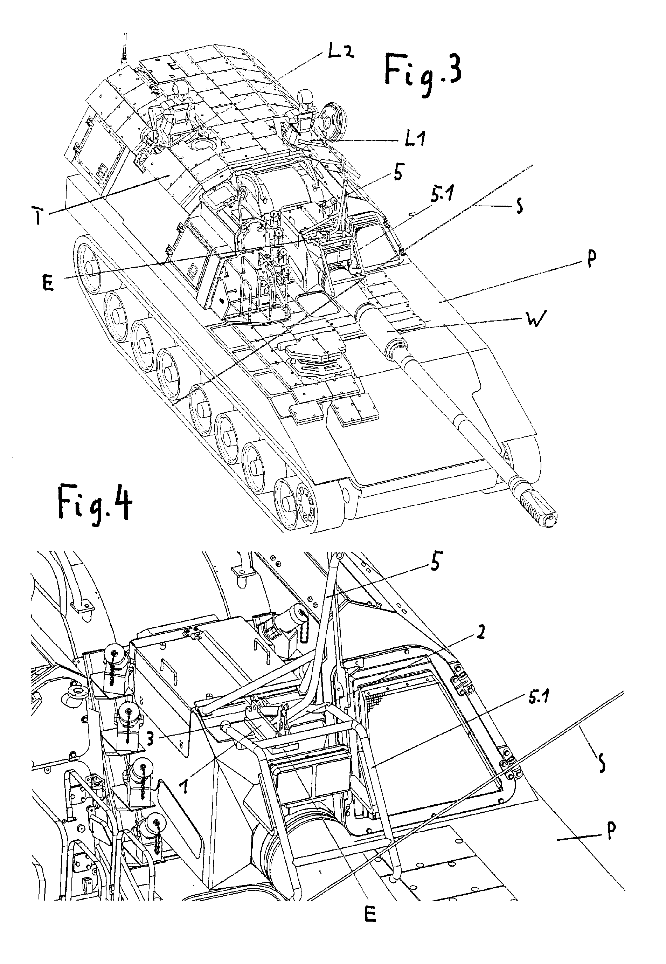

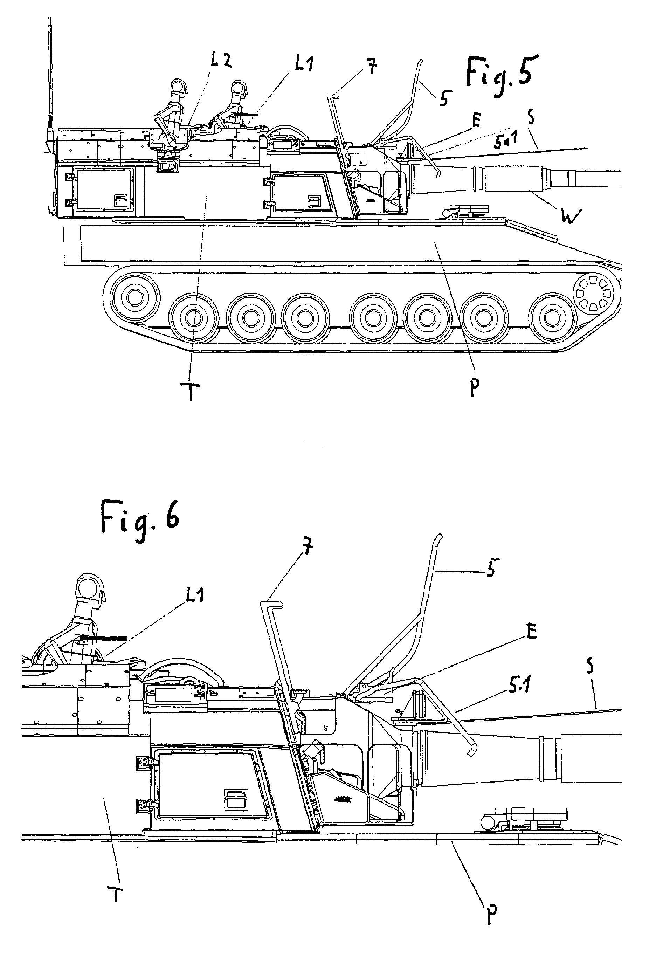

Die Fig. 3 bis 6 zeigen ein als Panzerhaubitze ausgebildetes Kampffahrzeug P mit einem Turm T, an dem eine schwere Waffe W angeordnet ist. An der Oberseite des Turmes sind zwei Ein-/Ausstiegsluken L1 und L2 angeordnet, in denen Besatzungsmitglieder während der Fahrt bei geöffneter Luke stehen können. Diese Besatzungsmitglieder sind durch ein oberhalb der Waffe W anlaufendes Seil S einer Drahtfalle außerordentlich gefährdet. Um dieser Gefährdung zu begegnen, ist oberhalb der Waffe W eine Einrichtung zum Schutz gegen Drahtfallen angeordnet, die eine in den Fig. 3 bis 6 allgemein mit E bezeichnete Schneidvorrichtung aufweist, die so aufgebaut ist, wie weiter oben anhand der Fig. 1 und 2 beschrieben. Weiterhin ist am Turm T eine Fang- und Führungsvorrichtung für das Seil S angeordnet mit Führungselementen 5 und 5.1, auf denen das Seil S je nach Anlaufhöhe entlanggleitet, bis es auf den Steuerschieber 2 der Schneidvorrichtung E auftrifft und den bereits beschriebenen Schneidvorgang zur Durchtrennung des Seiles S auslöst.

Obwohl aufgrund der Verwendung der aktiven Schneidvorrichtung E die Peitschenwirkung der abgetrennten Enden des Seiles S reduziert ist, kann es sinnvoll sein, zu beiden Seiten der Längsmittelebene des Turmes T noch weitere Fangvorrichtungen 7 anzuordnen, damit die abschnellenden Seilenden mit Sicherheit vom Bereich der Luken L1 und L2 ferngehalten werden. Selbstverständlich schützt die Einrichtung zum Schutz gegen Drahtfallen nicht nur die Besatzungsmitglieder in den Luken L1 und L2, sondern auch weitere, am Turm T angeordnete empfindliche Bauteile.

## Patentansprüche

1. Einrichtung zum Schutz gegen Drahtfallen zur Anordnung an einem Fahrzeug mit einer Schneidvorrichtung zum Durchtrennen eines Draht- oder Seilabschnitts der Drahtfalle, **dadurch gekennzeichnet, dass** die Schneidvorrichtung mindestens ein in einer Relativbewegung gegenüber dem Fahrzeug bewegbares Schneidelement (3) aufweist, wobei die Bewegung des Schneidelements (3) über eine Betätigungsvorrichtung (2-4-3.2-3.1) vom anlaufenden Draht- oder Seilabschnitt (S) ausgelöst wird.

2. Einrichtung nach Anspruch 1, **dadurch gekennzeichnet, dass** die Bewegung des Schneidelements (3) eine Verschwenkung in einer Schneidebene parallel zur Fahrtrichtung des Fahrzeugs ist.

3. Einrichtung nach Anspruch 1 oder 2, **dadurch gekennzeichnet, dass** dem Schneidelement (3) in seiner Bewegungsrichtung ein insbesondere fahrzeugfestes Gegenelement (6) gegenüberliegt.

4. Einrichtung nach Anspruch 3, **dadurch gekennzeichnet, dass** das Gegenelement (6) als Schneidelement ausgebildet ist.

5. Einrichtung nach Anspruch 3, **dadurch gekennzeichnet, dass** das Gegenelement (6) als Amboßelement ausgebildet ist.

6. Einrichtung nach Anspruch 2 und ggf. einem der Ansprüche 3 bis 5, **dadurch gekennzeichnet, dass** durch die Betätigungsvorrichtung (2-4-3.2-3.1) die Schubbewegung des anlaufenden Draht- oder Seilabschnitts (S) in die Schwenkbewegung des Schneidelements (3) umgewandelt wird.

7. Einrichtung nach Anspruch 6, **dadurch gekennzeichnet, dass** die Betätigungsvorrichtung als Steuerschieber (2) ausgebildet ist, der in Richtung des anlaufenden Draht- oder Seilabschnitts (S) verschiebbar geführt ist und auf dessen Vorderseite der Draht- oder Seilabschnitt (S) aufläuft, während an seiner Rückseite ein Steuernocken (2.11) angeordnet ist, der auf eine Steuerfläche (4) derart aufschiebbar ist, dass das Schneidelement (3) die Schwenkbewegung zum anlaufenden Draht- oder Seilabschnitt (S) hin ausführt.

8. Einrichtung nach Anspruch 7, **dadurch gekennzeichnet, dass** das Schneidelement (3) an einem Arm (3.1) eines zweiarmigen Schwenkhebels und die Steuerfläche (4) am anderen Arm (3.2) des Schwenkhebels angeordnet ist.

9. Einrichtung nach Anspruch 8, **dadurch gekennzeichnet, dass** der Steuerschieber (2) als Winkelstück ausgebildet ist mit einem in Verschiebungsrichtung angeordneten ersten Schenkel (2.1), der den Steuernocken (2.11) trägt, und einem senkrecht zum ersten Schenkel (2.1) und parallel zur Schneidebene des Schneidelements (3) angeordneten zweiten Schenkel (2.2), der an seiner Vorderseite die Auflauffläche für den Draht- oder Seilabschnitt trägt.

10. Einrichtung nach Anspruch 9, **dadurch gekennzeichnet, dass** der zweite Schenkel (2.2) am oberen Ende eine hakenartige Abknickung (2.21) nach vorne aufweist.

11. Einrichtung nach einem der Ansprüche 1 bis 10, **dadurch gekennzeichnet, dass** sie eine Fang- und Führungsvorrichtung (5-5.1) aufweist mit einer Führungsbahn, an deren Ende die Schneidvorrichtung (E) angeordnet ist und auf der der eingefangene Draht- oder Seilabschnitt (S) der Drahtfalle anläuft.

12. Fahrzeug, insbesondere Kampffahrzeug, **dadurch gekennzeichnet, dass** in Bezug auf die Fahrtrichtung des Fahrzeugs vor gegen die Wirkung einer Drahtfalle zu schützenden Teilen des Fahrzeugs eine Einrichtung nach einem der Ansprüche 1 bis 11 angeordnet ist.

13. Kampffahrzeug mit mindestens einer an seiner Oberseite angeordneten Ein-/Ausstiegsluke, **dadurch gekennzeichnet, dass** im Bereich vor der vordersten Luke eine Einrichtung nach einem der Ansprüche 1 bis 11 angeordnet ist.

14. Kampffahrzeug nach Anspruch 13 mit einem in Azimut schwenkbaren Turm, an dem eine in Elevation schwenkbare schwere Waffe angeordnet ist, **dadurch gekennzeichnet, dass** die Einrichtung nach einem der Ansprüche 1 bis 9 an der Vorderseite und/oder Rückseite des Turmes (T) angeordnet ist.

15. Kampffahrzeug nach Anspruch 14, **dadurch gekennzeichnet, dass** die Einrichtung nach einem der Ansprüche 1 bis 11 im Bereich oberhalb der schweren Waffe (W) angeordnet ist.
